# EUROPÄISCHE PATENTSCHRIFT

(11) **EP 0 993 095 B1**
(45) Veröffentlichungstag und Bekanntmachung des Hinweises auf die Patenterteilung: **27.04.2005**
(21) Anmeldenummer: 99119255.0
(22) Anmeldetag: 28.09.1999
(51) Int. Cl.: H02K 3/50, H02K 5/22

(54) **Stator für einen Elektromotor**
Stator for electric motor
Stator pour moteur électrique

(30) Priorität: 06.10.1998 DE 29817869 U
(43) Veröffentlichungstag der Anmeldung: 12.04.2000
(73) Patentinhaber: ebm-papst Mulfingen GmbH & Co.KG, 74673 Mulfingen (DE)
(72) Erfinder: Streng, Gunter, Dipl.-Ing., 74575 Schrozberg (DE); Zeller, Alfons, 97980 Bad Mergentheim (DE)
(74) Vertreter: Patentanwälte Dr. Solf & Zapf

(56) Entgegenhaltungen:
- EP-A- 0 411 275
- EP-A- 0 727 864
- WO-A-95/08208
- DE-A- 4 304 709
- US-A- 4 287 446
- US-A- 4 926 079

## Beschreibung

Die vorliegende Erfindung betrifft einen Stator für einen Elektromotor gemäß dem Oberbegriff des Patentanspruchs 1.

Ein solcher Stator ist aus dem Dokument WO 95/08208 A bekannt. Dieses Dokument beschreibt einen Kollektormotor, insbesondere in einer Ausführung als drehzahlgeregelter Einphasen-Reihenschlussmotor für einen Waschautomatenantrieb. Dieser Motor weist eine Kontaktierungs-Steckvorrichtung auf, wobei ein Anschlußstecker als Kontaktelement in eine "Mehrfach-Kontaktkammer" einsteckbar ist. Diese Kontaktkammer besteht aus einstückig an einer Endscheibe angeformten ersten Teilkammern sowie aus zweiten Teilkammern einer Trägerplatte. Dabei ist der Anschlußstecker mit Kontakten in diese Kontaktkammer-Anordnung einsteckbar.

Das Dokument US-A-4 287 446 beschreibt einen Stator mit an seinem Außenumfang verteilt angeordneten Kontaktkammern, die einstückig mit einem stirnseitigen Stator-Isolierteil ausgebildet sind. Jede Kontaktkammer nimmt ein Kontaktelement auf, welches als Doppelkontakt in Schneidklemmtechnik ausgeführt ist, um einerseits einen Wicklungsdraht und andererseits einen Anschlußleiter zu kontaktieren. Jede Kontaktkammer kann dadurch zwar als Doppelkammer bezeichnet werden, sie wird aber nicht von zwei Teilkammern verschiedener Teile gebildet.

Die EP 0 727 864 A2 beschreibt eine Verschaltungsanordnung zum Verbinden von Drahtenden einer Statorwicklung eines Elektromotors mit Anschlußleitern. Diese bekannte Verschaltungsanordnung besteht im wesentlichen aus einem ringscheibenförmigen Basisteil aus einem elektrisch isolierenden Material. Das Basisteil ist mit einer zentrischen Öffnung auf einem Stirnisolationsschaft des Stators so befestigt, dass es auch als Wickelkopfabdeckung fungiert. Auf dem Basisteil sind elektrische Verbinderelemente zum Anschluß der Drahtenden und der Anschlußleiter gehaltert. Die Verbinderelemente sind als Blechstanzteile ausgebildet und in flach auf dem Basisteil liegender Anordnung gehaltert. Die Anschlußleiter werden jeweils über einen Krimpabschnitt angeschlossen, während zum Anschluß der Wicklungsdrahtenden jeweils eine Anschlussfahne vorgesehen ist, die einen als Klemmzunge ausgebildeten Anschluß zur elektrisch leitenden Verbindung mit dem jeweiligen Drahtende besitzt. Diese bekannte Verschaltungsanordnung hat den besonderen Vorteil, daß sie wahlweise einen Betrieb mit oder ohne Temperaturwächter ermöglicht, allerdings erlaubt sie nur sehr bedingt ein automatisches Verschalten.

Die EP 0 777 312 A2 beschreibt einen weiteren Stator mit einer Verschaltungsanordnung für die Statorwicklungen. Diese bekannte Anordnung weist ein Isolierteil mit nutenförmigen Kammern für die Aufnahme von elektrischen, gegeneinander isolierten Verbindungsleitern für die Verschaltung der Wicklungsdrahtenden der Statorwicklungen auf. Auch hierbei ist ein automatisches Verschalten der Statorwicklungen nicht oder nur bedingt möglich.

Die EP 0 438 412 B1 beschreibt eine Motorfeldwicklung mit Zwischenanzapfung, wobei auf einer Klemmbrett-Konstruktion Zwischen-Kontaktmittel derart angeordnet sind, daß während des Wickelvorgangs der Wicklungsdraht nach einer bestimmten Anzahl von Windungen durch die Zwischen-Kontaktmittel geführt werden kann. An dieser Stelle kann dann über spezielle Kontaktmittel eine elektrische Verbindung hergestellt werden. Diese Kontaktmittel sind hierzu als Schneidklemmverbinder ausgebildet.

Die DD 123 252 beschreibt ein Formteil zum Festlegen von Wicklungsenden bei Wicklungen auf ausgeprägten Polen elektrischer Klein- und Kleinstmaschinen. Dieses bekannte Formteil ist als flacher Ring oder Halbring ausgebildet, bei dem auf der einen flachen Seite Stützpunkte für die Wicklungsenden angeordnet sind. Die andere flache Seite liegt stirnseitig auf dem Blechpaket auf, wobei das Formteil form-, kraft- oder stoffschlüssig mit dem Blechpaket verbunden ist.

Für bestimmte Motor-Ausführungen bzw. Anwendungsfälle ist es erforderlich, an einigen Anschlusspunkten mehrere Anschlussleiter mit einem Wicklungsdraht zu verbinden. Beispielsweise ist dies der Fall, wenn ein Motor mit einem sogenannten Temperaturwächter ausgestattet und / oder als mehrstufiger Motor hergestellt werden soll. Vor allem bei Motoren mit einer relativ großen Anzahl von Statornuten, aber auch bei kleineren Motoren mit weniger Nuten, ergeben sich dann Probleme, die erforderlichen Anschlüsse im Wickelkopfbereich räumlich unterzubringen, weil wegen der durch die Statornuten verlaufenden Wicklungen im Grunde nur der Raum axial oberhalb der jeweils zwischen den Nuten liegenden Statorstege verbleibt.

Der vorliegenden Erfindung liegt die Aufgabe zugrunde, einen Stator der eingangs beschriebenen, gattungsgemäßen Art zu schaffen, der mit der jeweils erforderlichen bzw. gewünschten Verschaltung eine sehr weitgehende automatische Herstellung preisgünstig und mit hohem Qualitätsstandard ermöglicht.

Erfindungsgemäß wird dies durch die Merkmale des Patentanspruchs 1 erreicht. Vorteilhafte Ausgestaltungsmerkmale der Erfindung sind Gegenstand der abhängigen Ansprüche.

Die spezielle Anordnung der Mehrfach-Kontaktkammern relativ zu der Einzel-Kontaktkammer macht es möglich, auch durch eine automatisierte Montage das Kontaktbrückenelement wahlweise in zwei unterschiedlichen Stellungen zu montieren, und zwar beispielsweise zu dem Zweck, die Drehrichtung des Motors umzuschalten.

Jede Mehrfach-Kontaktkammer ist durch Teilkammern einerseits einer der Isolier-Endscheiben und andererseits einer zusätzlichen wickelkopfseitig aufgesetzten Verdrahtungsplatte derart gebildet, dass die Teilkammern im montierten Zustand der Verdrahtungsplatte benachbart nebeneinander angeordnet sind und ein gemeinsames, die Teilkammern brückenartig verbindendes Kontaktelement aufnehmen. Es braucht im Grunde nur eine der Teilkammern zum Anschluss des Wicklungsdrahtes im zwischen den Statornuten liegenden Bereich angeordnet zu sein, während mindestens eine weitere Teilkammer als insbesondere integraler Teil der Verdrahtungsplatte sogar axial oberhalb einer Statornut angeordnet sein kann. Dennoch können die Teilkammern unmittelbar benachbart angeordnet sein, so daß ein gemeinsames Kontaktelement einsetzbar ist. Dabei ist es für die angestrebte Automatisierung vorteilhaft, wenn das Kontaktelement als Schneidklemmverbinder ausgeführt ist. Während des Wicklungsprozesses wird der Wicklungsdraht automatisch durch Schlitze hindurch in die Kontaktkammer eingelegt. Nach dem Wickelvorgang wird die Verdrahtungsplatte aufgesetzt, und anschließend wird das Kontaktelement eingesetzt, wobei es den durch die eine Teilkammer verlaufenden Wicklungsdraht selbsttätig über Schneidklemmkanten kontaktiert und so auch fixiert. In jede Teilkammer kann dann ein Anschlußleiter angedrückt und so ebenfalls selbsttätig mit dem Kontaktelement elektrisch verbunden werden.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll die Erfindung genauer erläutert werden. Dabei zeigen:
- Fig. 1: eine Perspektivansicht auf eine Stirnseite eines erfindungsgemäßen Stators im fertig montierten und verschalteten Zustand,
- Fig. 2: eine entsprechende Perspektivansicht auf das bewickelte Statorblechpaket und
- Fig. 3: eine entsprechende Perspektivansicht einer erfindungsgemäßen Verdrahtungsplatte vor dem Aufsetzen auf das Statorblechpaket gemäß Fig. 2.

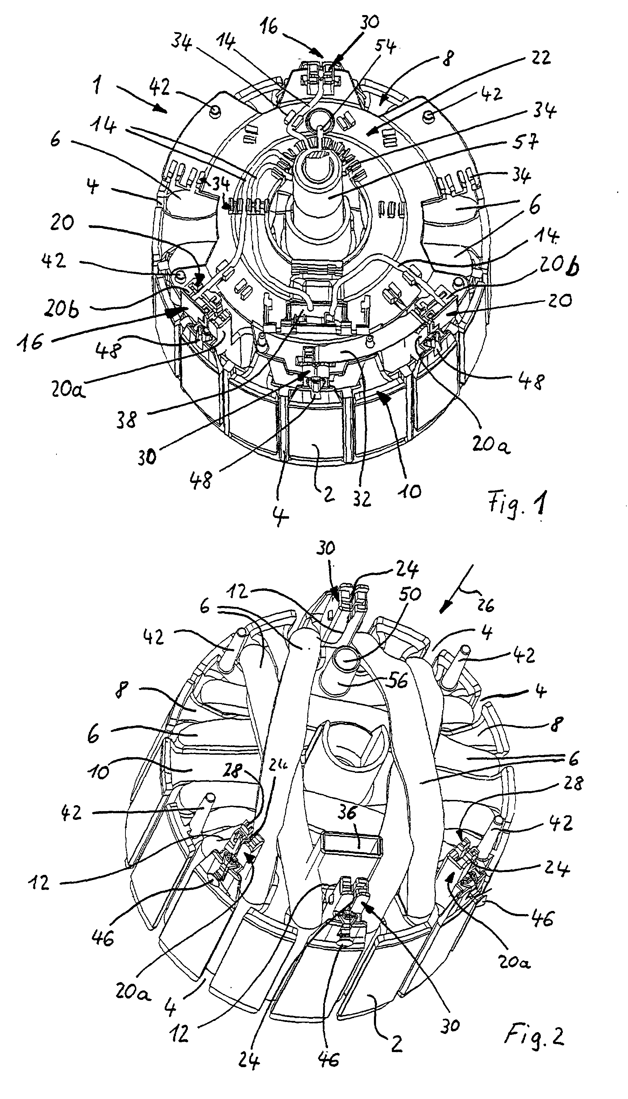

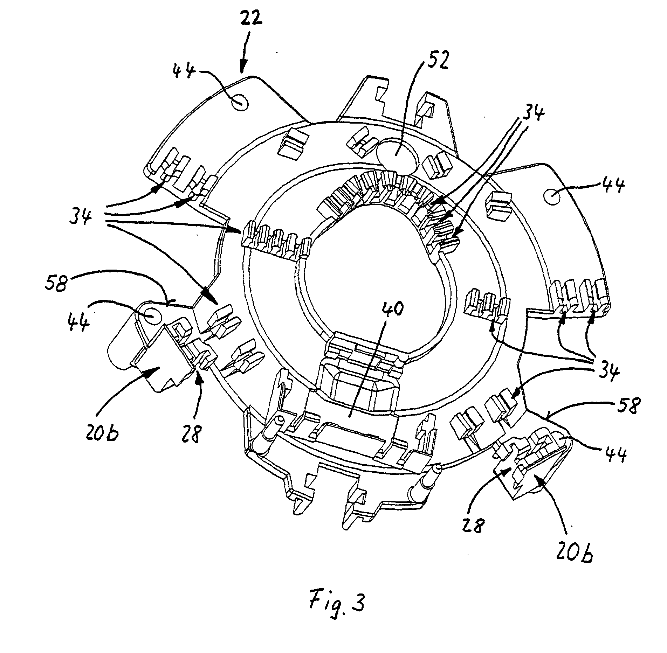

Wie sich zunächst aus Fig. 1, zum Teil aber auch aus Fig. 2 und 3 ergibt, besteht ein erfindungsgemäßer Stator (1) aus einem Statorblechpaket (2) mit Statornuten (4), durch die Statorwicklungen (6) verlaufen. Zwischen den Statornuten (4) sind jeweils Statorstege (8) gebildet. Das aus einzeln geschichteten Blechlamellen bestehende Statorblechpaket (2) ist an seinen beiden Stirnseiten sowie innerhalb der Nuten mit einer isolierenden Kunststoffmasse umspritzt. Dies dient einerseits der Isolierung der Wicklungen innerhalb der Nuten als auch der Isolierung des Wickelkopfes im Bereich der Stirnseiten gegenüber dem Statorblechpaket. Bei dem Teil der Isolierung des stirnkopfseitigen Bereiches handelt es sich um sogenannte Isolier-Endscheiben (10).

Der Stator (1) weist zum Verschalten von Wicklungsdrähten (12) der Statorwicklungen (6) mit elektrischen Anschlußleitungen (14) eine Verschaltungsanordnung (16) auf.

Diese Verschaltungsanordnung (16) weist mindestens eine Mehrfach-Kontaktkammer (20) insbesondere zum Anschluß von mindestens zwei Anschlußleitungen (14) und einem Wicklungsdraht (12) auf. Diese Mehrfach-Kontaktkammer (20) ist durch Teilkammern (20a und 20b) einerseits einer der Isolier-Endscheiben (10) und andererseits einer zusätzlichen, gesondert in Fig. 3 dargstellten, wickelkopfseitig aufzusetzenden Verdrahtungsplatte (22) derart gebildet, daß die Teilkammern (20a, 20b) im montierten Zustand der Verdrahtungsplatte (22) - siehe Fig. 1 - benachbart nebeneinander angeordnet sind und ein gemeinsames, die Teilkammern (20a, 20b) brückenartig verbindendes Kontaktelement aufnehmen. Dieses Kontaktelement ist in der Zeichnung nicht gesondert erkennbar.

In der dargestellten, bevorzugten Ausführungsform ist die Mehrfach-Kontaktkammer (20) als Doppelkammer ausgebildet, so daß sie aus einer ersten, vorteilhafterweise einstückig an die Endscheibe (10) angeformten Teilkammer (20a) und einer zweiten, mit der Verdrahtungsplatte (22) einstückigen Teilkammer (20b) besteht. Dabei ist das Kontaktelement bevorzugt als Schneidklemmkontakt ausgebildet.

Ferner ist die Mehrfach-Kontaktkammer (20) derart ausgebildet, daß zunächst ein Wicklungsdraht (12) gemäß Fig. 2 in die Teilkammer (20a) der Endscheibe (10) in einem zur Endscheibe (10) etwa parallelen und zur Motorachse radialen Verlauf durch entsprechende Schlitze (24) hindurch einlegbar ist, nach Fertigstellung der Statorwicklungen (6) und Montage der Verdrahtungsplatte (22) durch Aufsetzen in axialer Richtung (vgl. den zwischen Fig. 2 und 3 eingezeichneten Pfeil 26) das Kontaktelement in axialer Richtung in die Mehrfach-Kontaktkammer (20) unter Kontaktierung des Wicklungsdrahtes (12) einsetzbar ist und schließlich jeweils eine Anschlußleitung (14) mit einem zur Endscheibe (10) ebenfalls etwa parallelen Verlauf in axialer Richtung unter Kontaktierung des Kontaktelementes in jede der Teilkammern (20a, 20b) eindrückbar ist. Hierzu ist das Kontaktelement im Bereich jeder Teilkammer (20a, 20b) bevorzugt etwa H-förmig mit zwei axial gegenüberliegenden Leiter-Kontaktaufnahmen und jeweils zwei Leiterkontakt-Schneidkanten ausgebildet.

Wie sich insbesondere aus Fig. 2 und 3 ergibt, ist die Verdrahtungsplatte (22) mit der Endscheibe (10) im Bereich der Teilkammern (20a, b) über eine axial ausgerichtete Schiebeverbindung (28) nach Art einer Nut/Feder-Verbindung verbunden. Hierdurch wird ein fester Zusammenhalt der Teilkammern (20a, b) der Mehrfach-Kontaktkammer (20) gewährleistet.

Erfindungsgemäß weist die Verschaltungsanordnung (16) eine weitere, also zweite, gleichartige Mehrfach-Kontaktkammer (20) auf. Darüber hinaus ist mindestens eine an die Endscheibe (10) einstückig angeformte Einzel-Kontaktkammer (30) vorgesehen. Beim dargestellten Beispiel handelt es sich um zwei etwa diametral gegenüberliegend angeordnete Einzel-Kontaktkammern (30). Jede Einzel-Kontaktkammer (30) nimmt ein nicht näher bezeichnetes Schneidklemm-Kontaktelement auf, welches zur Kontaktierung des Wicklungsdrahtes (12) und der Anschlußleitung (14) ebenfalls etwa H-förmig ausgebildet ist.

Gemäß der Erfindung sind nun die zwei Mehrfach-Kontaktkammern (20) und eine der Einzel-Kontaktkammern (30) in derart symmetrischer Anordnung relativ zueinander angeordnet, daß ein formstabiles, insbesondere aus Metallblech bestehendes Kontaktbrückenelement (32) zwischen die Einzel-Kontaktkammer (30) und wahlweise eine der beiden Mehrfach-Kontaktkammern (20) einsetzbar und hierbei elektrisch mit den jeweiligen Kontaktelementen verbindbar ist. Diese vorteilhafte Ausgestaltung dient beispielsweise dazu, die Drehrichtung des Motors umzuschalten.

Gemäß Fig. 1 und 3 weist die Verdrahtungsplatte (22) auf ihrer von dem Statorblechpaket (2) wegweisenden Oberseite eine Vielzahl von Fixierelementen (34) zur insbesondere klemmenden Halterung und Fixierung der Anschlußleitungen (14) in der jeweils gewünschten bzw. zweckmäßigen Verlaufsform auf. Weiterhin ist bevorzugt eine an die Endscheibe (10) einstückig angeformte Aufnahme (36) für einen Temperaturwächter (38) vorgesehen, wobei die Verdrahtungsplatte (22) in diesem Bereich eine Durchgangsöffnung (40) aufweist.

Zweckmäßigerweise besitzen die Endscheibe (10) und die Verdrahtungsplatte (22) Positioniermittel derart, daß die Verdrahtungsplatte (22) nur in einer bestimmten Ausrichtung mit der Endscheibe (10) verbindbar ist. Vorzugsweise besitzt die Endscheibe (10) angeformte Positionierstifte (42), die in Löcher (44) der Verdrahtungsplatte (22) eingreifen und dann vorzugsweise noch thermisch verstemmt werden. Darüber hinaus können mit Vorteil zusätzliche Rastverbindungen insbesondere im Bereich der Kontaktkammern (20,30) vorgesehen sein.

Für einen automatisierten Wicklungsvorgang ist es vorteilhaft, wenn im Bereich der Kontaktkammern (20a, 30) Fixierelemente (46) lösbar anbringbar sind, so daß die Enden der Wicklungsdrähte (12) während des Wicklungsprozesses an den Fixierelementen (46) fixierbar sind. Vorzugsweise sind die - insbesondere etwa pilzförmig ausgebildeten - Fixierelemente (46) (siehe Fig. 2) jeweils in einer vom Statorblechpaket (2) radial abstehenden Anordnung in Verlängerung jeweils eines radialen Wicklungsdraht-Durchführschlitzes (24) der jeweiligen Kontaktkammer (20a bzw. 30) anbringbar. Besonders zweckmäßig ist es, wenn jedes Fixierelement (46) in eine axiale Haltenut (48) (Fig. 1) einschiebbar ist, so daß es nach dem Wickelvorgang auch wieder entsprechend durch Herausziehen entfernbar ist. Die jeweilige Haltenut (48) ist in den Bereich der Endscheibe (10) bzw. der jeweiligen Kontaktkammer (20a, 30) eingeformt. Die Funktion dieser Maßnahme wird im Folgenden noch genauer erläutert werden.

Der Vollständigkeit halber sei erwähnt, daß die Endscheibe (10) und die Verdrahtungsplatte (22) jeweils mindestens eine Durchführöffnung (50,52) für einen Schutzleiter (54) aufweisen. Die Endscheibe (10) weist als Durchgangsöffnung (50) einen rohrartigen Ansatz (56) auf, der durch die entsprechende Öffnung (52) der Verdrahtungsplatte (22) greift.

Im Folgenden wird die Herstellung bzw. Montage des erfindungsgemäßen Stators genauer erläutert.

Zunächst wird das geschichtete Statorblechpaket (2) zur Bildung der Endscheiben (10) mit Kunststoff umspritzt. Vor dem Wickelvorgang werden zweckmäßigerweise die Fixierelemente (46) eingesetzt. Der Anfang des Wicklungsdrahtes (12) wird dann an einem der Fixierelemente (46) fixiert, und das Bewickeln kann dann automatisch erfolgen, indem der Wicklungsdraht (12) zunächst durch die erste Kontaktkammer (20a) geführt wird. Von jeder Wicklung wird das Ende des Wicklungsdrahtes durch eine weitere Kontaktkammer, beispielsweise die Kontaktkammer (30), geführt und hier zweckmäßigerweise ebenfalls an einem Fixierelememt (46) befestigt. Nach dem Herstellen aller Wicklungen wird die Verdrahtungsplatte (22) gemäß Fig. 3 in Pfeilrichtung 26 auf die Wickelkopfseite des Stators aufgesetzt und befestigt. Es werden dann alle Kontaktkammern mit entsprechenden Kontaktelementen bestückt, indem letztere in axialer Richtung in die Kammern eingesetzt werden. Dabei erfolgt automatisch eine Kontaktierung der durch die Kontaktkammern verlaufenden Wicklungsdrähte (12). Anschließend können die Anfänge und Enden der Wicklungsdrähte (12) zusammen mit den Fixierelementen (46) entfernt werden. Die motorseitigen Anschlußleitungen (14) werden nun entsprechend der erforderlichen Verschaltung des Stators (1) in Schlitze der Kontaktkammern eingedrückt. Die Isolation der Anschlußleitungen (14) wird dabei durchbrochen bzw. durchschnitten und hierdurch der elektrische Kontakt hergestellt. Entsprechend wird auch der Temperaturwächter (38) eingesetzt und angeschlossen. Hierbei läßt sich auf einfache Weise auch die Drehrichtung des Motors ohne Veränderung des Wickelschemas bestimmen, indem lediglich die mit der jeweiligen Wicklung zu verschaltende Anschlußleitung (14) des Temperaturwächters (38) und das Kontaktbrückenelement (32) in entsprechende Anschlußverbindung gebracht werden. Dadurch ist es vorteilhafterweise möglich, erst zu einem relativ späten Fertigungsstand zu entscheiden, welche Drehrichtung der Motor aufweisen soll. Am konkreten Beispiel der Fig. 1 bedeutet dies, daß bei der einen Drehrichtung das Kontaktbrückenelement (32) wie dargestellt von der Kontaktkammer (30) nach rechts zur ersten Teilkammer (20a) verläuft und der Anschlußleiter (14) des Temperaturwächters (38) an der rechten Teilkammer (20b) angeschlossen ist. Bei der umgekehrten Drehrichtung wäre das Kontaktbrückenelement (32) entsprechend links einzusetzen, während der Temperaturwächter mit der Anschlußleitung (14) an der linken Kontaktkammer (20b) anzuschließen wäre. Bei mehrstufigen Motoren erfolgt die Drehzahlumschaltung in ähnlicher Weise ebenfalls durch Umstecken des Kontaktbrückenelementes (32), allerdings mit modifizierten Anschlußpunkten für Kondensator und Anschlußleitung. Anschließend wird eine Achse (57), die zumindest bereichsweise als Hohlachse ausgeführt und bereits mit Anschlußleitungen (14) bestückt ist, über den Stirnisolationsschaft in das Statorblechpaket eingepreßt, und der Motor kann nun die weiteren Arbeitsgänge bis zu seiner Fertigstellung durchlaufen.

In dem dargestellten Ausführungsbeispiel sind zwei Wicklungen vorgesehen, beispielsweise für einen Kondensatormotor mit einer Hauptwicklung und einer Hilfswicklung. Für Motoren, bei denen die Drehzahl mittels Stufenschalter auf mehrere Stufen umgeschaltet werden sollen, ist es erforderlich, die Wicklungen mit Zwischenanzapfungen zu versehen. Hierzu bietet die erfindungsgemäße Ausgestaltung die vorteilhafte Möglichkeit, die Verdrahtungsplatte (22) mit radialen Aussparungen (58) zu versehen, und in diesen Bereichen kann die Endscheibe (10) weitere angeformte Kontaktkammern aufweisen (nicht dargestellt), in denen dann Zwischenverbindungselemente angeordnet sind. Auf diese Weise läßt sich ebenfalls im automatischen Wickelvorgang der jeweilige Wicklungsdraht durch die Zwischenverbindungen führen und mit Klemmschneidkontakten kontaktieren. An diesen Kontaktpunkten können dann entsprechende weitere Anschlußleiter angeschlossen werden.

## Patentansprüche

1. Stator (1) für einen Elektromotor, insbesondere für einen Außenläufermotor, bestehend aus einem Statorblechpaket (2) mit Statorwicklungen (6), einer Verschaltungsanordnung (16) zum Verschalten von Wicklungsdrähten (12) der Statorwicklungen (6) mit elektrischen Anschlußleitungen (14) sowie mit stirnseitig an das Statorblechpaket (2) angeformten Isolier-Endscheiben (10), wobei die Verschaltungsanordnung (16) eine Mehrfach-Kontaktkammer (20) aufweist, die durch Teilkammern (20a, 20b) einerseits einer der Isolier-Endscheiben (10) und andererseits einer zusätzlichen wickelkopfseitig aufgesetzten Verdrahtungsplatte (22) derart gebildet ist, dass die Teilkammern (20a, 20b) im montierten Zustand der Verdrahtungsplatte (22) benachbart nebeneinander angeordnet sind und ein gemeinsames, die Teilkammern (20a, 20b) verbindendes Kontaktelement aufnehmen,
**dadurch gekennzeichnet, dass** eine weitere, gleichartige Mehrfach-Kontaktkammer (20) sowie mindestens eine an die Endscheibe (10) einstückig angeformte Einzel-Kontaktkammer (30) vorhanden sind, wobei die Mehrfach-Kontaktkammern (20) und die Einzel-Kontaktkammer (30) in derart symmetrischer Anordnung relativ zueinander angeordnet sind, dass ein Kontaktbrückenelement (32) zwischen die Einzel-Kontaktkammer (30) und wahlweise eine der Mehrfach-Kontaktkammern (20) einsetzbar ist.

2. Stator nach Anspruch 1,
**dadurch gekennzeichnet, dass** die/jede Mehrfach-Kontaktkammer (20) als Doppelkammer aus einer einstückig an die Endscheibe (10) angeformten ersten Teilkammer (20a) und einer mit der Verdrahtungsplatte (22) einstückigen zweiten Teilkammer (20b) besteht.

3. Stator nach Anspruch 1 oder 2,
**dadurch gekennzeichnet, dass** das Kontaktelement als Schneidklemmkontakt ausgebildet ist.

4. Stator nach einem der Ansprüche 1 bis 3,
**dadurch gekennzeichnet, dass** die/jede Mehrfach-Kontaktkammer (20) derart ausgebildet ist, dass zunächst ein Wicklungsdraht (12) in die Teilkammer (20a) der Endscheibe (10) in einem zur Endscheibe (10) etwa parallelen Verlauf durch entsprechende Schlitze (24) hindurch einlegbar ist, nach Fertigstellung der Statorwicklungen (6) und Montage der Verdrahtungsplatte (22) das Kontaktelement in axialer Richtung in die Mehrfach-Kontaktkammer (20) einsetzbar ist und schließlich jeweils eine Anschlußleitung (14) mit einem zur Endscheibe (10) etwa parallelen Verlauf in axialer Richtung unter Kontaktierung des Kontaktelementes in jede der Teilkammern (20a, 20b) eindrückbar ist.

5. Stator nach einem der Ansprüche 1 bis 4,
**dadurch gekennzeichnet, dass** das Kontaktelement im Bereich jeder Teilkammer (20 a,b) etwa H-förmig mit zwei gegenüberliegenden Leiterkontaktaufnahmen und zwei Leiterkontakt-Schneidkanten ausgebildet ist.

6. Stator nach einem der Ansprüche 1 bis 5,
**dadurch gekennzeichnet, dass** die Teilkammern (20a, 20b) der/jeder Mehrfach-Kontaktkammer (20) über eine axial ausgerichtete Schiebeverbindung (28) nach Art einer Nut/Feder-Verbindung miteinander verbunden sind.

7. Stator nach einem der Ansprüche 1 bis 6,
**dadurch gekennzeichnet, dass** die Einzel-Kontaktkammer (30) mit einem etwa H-förmigen Schneidklemm-Kontaktelement bestückt ist.

8. Stator nach einem der Ansprüche 1 bis 7,
**dadurch gekennzeichnet, dass** die Verdrahtungsplatte (22) auf ihrer von dem Statorblechpaket (2) wegweisenden Oberseite Fixierelemente (34) zur insbesondere klemmenden Halterung der Anschlußleitungen (14) aufweist.

9. Stator nach einem der Ansprüche 1 bis 8,
**gekennzeichnet durch** eine an die Endscheibe (10) einstückig angeformte Aufnahme (36) für einen Temperaturwächter (38), wobei die Verdrahtungsplatte (22) in diesem Bereich eine Durchgangsöffnung (40) aufweist.

10. Stator nach einem der Ansprüche 1 bis 9,
**dadurch gekennzeichnet, dass** die Endscheibe (10) und die Verdrahtungsplatte (22) Positioniermittel derart aufweisen, dass die Verdrahtungsplatte (22) nur in einer bestimmten Ausrichtung mit der Endscheibe (10) verbindbar ist.

11. Stator nach einem der Ansprüche 1 bis 10,
**gekennzeichnet durch** lösbar im Bereich der Kontaktkammern (20, 30) anbringbare Fixierelemente (46) für die Enden der Wicklungsdrähte (12) während des Wicklungsprozesses.

12. Stator nach Anspruch 11,
**dadurch gekennzeichnet, dass** die vorzugsweise etwa pilzförmig ausgebildeten Fixierelemente (46) jeweils in vom Statorblechpaket (2) radial abstehender Anordnung in Verlängerung jeweils eines radialen Wicklungsdraht-Durchführschlitzes (24) der jeweiligen Kontaktkammer (20, 30) anbringbar sind.

13. Stator nach Anspruch 11 oder 12,
**dadurch gekennzeichnet, dass** jedes Fixierelement (46) in eine in die Endscheibe (10) bzw. die jeweilige Kontaktaufnahme (20, 30) eingeformte, axiale Haltenut (48) einschiebbar ist.

14. Stator nach einem der Ansprüche 1 bis 13,
**dadurch gekennzeichnet, dass** die Endscheibe (10) und die Verdrahtungsplatte (22) jeweils eine Durchgangsöffnung (50, 52) für einen Schutzleiter (54) aufweisen.

## Claims

1. A stator (1) for an electric motor, in particular for an external rotor motor, comprising a laminated stator core (2) with stator windings (6), an interconnection arrangement (16) for the connection of winding wires (12) of the stator windings (6) to electrical connecting lines (14), and insulating end plates (10) formed on the end of the laminated stator core (2), wherein the interconnection arrangement (16) has a multiple contact chamber (20) formed by sub-chambers (20a, 20b) of one of the insulating end plates (10) and of an additional wiring board (22), mounted on the winding-head side, so that the sub-chambers (20a, 20b) are adjacently arranged side by side in the mounted state of the wiring board (22) and receive a common contact element connecting the sub-chambers (20a, 20b), **characterised in that** a further multiple contact chamber (20) of the same type and at least one single contact chamber (30) formed in one piece on the end plate (10) are provided, the multiple contact chambers (20) and the single contact chamber (30) being symmetrically arranged relative to one another so that a contact-bridge element (32) is insertable between the single contact chamber (30) and either one of the multiple contact chambers (20).

2. A stator according to claim 1, **characterised in that** the/each multiple contact chamber (20), as a double chamber, comprises a first sub-chamber (20a) formed in one piece on the end plate (10) and a second sub-chamber (20b) in one piece with the wiring board (22).

3. A stator according to claim 1 or 2, **characterised in that** the contact element is formed as an insulation displacement contact.

4. A stator according to any one of claims 1 to 3, **characterised in that** the/each multiple contact chamber (20) is formed so that first a winding wire (12) is insertable through corresponding slots (24) into the sub-chamber (20a) of the end plate (10) so as to extend substantially parallel thereto, after completion of the stator windings (6) and mounting of the wiring board (22) the contact element is insertable into the multiple contact chamber (20) in the axial direction, and lastly a connecting line (14) is pushable into each of the sub-chambers (20a, 20b) in the axial direction so as to extend substantially parallel to the end plate (10) and so as to contact the contact element.

5. A stator according to any one of claims 1 to 4, **characterised in that** the contact element in the region of each sub-chamber (20a, b) is substantially H-shaped with two opposing conductor-contact receptacles and two conductor-contact cutting edges.

6. A stator according to any one of claims 1 to 5, **characterised in that** the sub-chambers (20a, 20b) of the/each multiple contact chamber (20) are connected to one another by an axially orientated sliding connection (28) in the manner of a tongue/groove connection.

7. A stator according to any one of claims 1 to 6, **characterised in that** the single contact chamber (30) is provided with a substantially H-shaped insulation displacement contact element.

8. A stator according to any one of claims 1 to 7, **characterised in that** the wiring board (22) has, on its upper surface facing away from the laminated stator core (2), fixing components (34) for holding, in particular clamping, the connecting lines (14).

9. A stator according to any one of claims 1 to 8, **characterised by** a receptacle (36) formed in one piece on the end plate (10) and provided for a temperature controller (38), wherein the wiring board (22) has a through opening (40) in this region.

10. A stator according to any one of claims 1 to 9, **characterised in that** the end plate (10) and the wiring board (22) have positioning means such that the wiring board (22) is connectable to the end plate (10) only in a particular orientation.

11. A stator according to any one of claims 1 to 10, **characterised by** fixing components (46) which are detachably mountable in the region of the contact chambers (20, 30) and are provided for the ends of the winding wires (12) during the winding process.

12. A stator according to claim 11, **characterised in that** the preferably approximately mushroom-shaped fixing components (46) are each mountable so as to project radially from the laminated stator core (2), in each case as an extension of a radial winding-wire feed-through slot (24) of the respective contact chamber (20, 30).

13. A stator according to claim 11 or 12, **characterised in that** each fixing component (46) is pushable into an axial holding groove (48) formed in the end plate (10) or the respective contact receptacle (20, 30).

14. A stator according to any one of claims 1 to 13, **characterised in that** the end plate (10) and the wiring board (22) each have a through opening (50, 52) for a protective conductor (54).

## Revendications

1. Stator (1) pour un moteur électrique, notamment pour un moteur à induit extérieur, constitué d'un paquet de tôle de stator (2) avec des enroulements de stator (6), d'un agencement de câblage (16) pour câbler des câbles d'enroulement (12) des enroulements de stator (6) avec des conduites de raccordement électriques (14), ainsi que des plaques d'extrémité isolantes (10) formées par moulage sur le côté frontal du paquet de tôle de stator (2), l'agencement de câblage (16) étant muni d'une chambre de contacts multiple (20) qui est constitué par des chambres partielles (20a, 20b) d'une part de l'une des plaques d'extrémités isolantes (10) et d'autre part d'une plaque de câblage (22) supplémentaire posée à côté de la tête d'enroulement, de façon à ce que lorsque la plaque de câblage (22) est montée, les chambres partielles (20a, 20b) soient disposées de façon voisine les unes à côté des autres et réceptionnent un élément de contact commun reliant les chambres partielles (20a, 20b),
**caractérisé en ce qu'**une autre chambre de contacts multiple (20) similaire, ainsi qu'au moins une chambre de contact individuelle (30) moulée en monobloc sur la plaque d'extrémité (10) sont prévues, la chambre de contacts multiple (20) et la chambre de contact individuelle étant disposées en configuration symétrique l'une par rapport à l'autre de façon telle, qu'un élément de contact en pont (32) puisse être inséré entre la chambre de contact individuelle (30) et au choix l'une des chambres de contacts multiple (20).

2. Stator selon la revendication 1,
**caractérisé en ce que** la/chaque chambre de contacts multiple (20) en tant que chambre double est constituée d'une première chambre partielle (20a), moulée en monobloc sur la plaque d'extrémité (10) et d'une seconde chambre partielle (20b) moulée en monobloc avec la plaque d'extrémité (22).

3. Stator selon la revendication 1 ou 2
**caractérisé en ce que** l'élément de contact est conçu en tant que raccord à borne guillotine.

4. Stator selon l'une quelconque des revendications 1 à 3,
**caractérisé en ce que** la/chaque chambre de contacts multiple (20) est conçue de façon telle que d'abord un câble d'enroulement (12) peut être inséré dans la chambre partielle (20a) de la plaque d'extrémité (10), à travers des fentes (24) correspondantes, selon un trajet approximativement parallèle à la plaque d'extrémité (10), **en ce qu'**après achèvement des enroulements du stator (6) et montage de la plaque de câblage (22), l'élément de contact est insérable en direction axiale dans la chambre de contacts multiple (20) et **en ce que** finalement respectivement une conduite de raccordement (14) peut être pressée dans chacune des chambres partielles (20a, 20b), en direction axiale avec un trajet approximativement parallèle à la plaque d'extrémité (10) en contactant l'élément de contact .

5. Stator selon l'une quelconque des revendications 1 à 4,
**caractérisé en ce que** l'élément de contact dans la zone de chaque chambre partielle (20 a, b) est conçu approximativement en forme de H, avec deux logements opposés pour contacts de conducteurs et deux arêtes coupantes pour contacts de conducteurs.

6. Stator selon l'une quelconque des revendications 1 à 5,
**caractérisé en ce que** les chambres partielles (20a, 20b) de la/de chaque chambre de contacts multiple (20) sont reliées entre elles par l'intermédiaire d'une liaison par curseur (28) orientée en direction axiale, à la façon d'une liaison par rainure et languette.

7. Stator selon l'une quelconque des revendications 1 à 6,
**caractérisé en ce que** la chambre de contact individuelle (30) est équipée d'un raccord à borne guillotine approximativement en forme de H.

8. Stator selon l'une quelconque des revendications 1 à 7,
**caractérisé en ce que** sur sa face supérieure s'éloignant du paquet de tôle de stator (2), la plaque de câblage (22) est munie d'éléments de fixation (34), pour notamment le maintien par serrage des conduites de raccordement (14).

9. Stator selon l'une quelconque des revendications 1 à 8,
**caractérisé par** un logement (36) moulé en monobloc sur la plaque d'extrémité (10) pour un contrôleur de températures (38), la plaque de câblage (22) étant dotée d'un orifice de passage (40) dans cette région.

10. Stator selon l'une quelconque des revendications 1 à 9,
**caractérisé en ce que** la plaque d'extrémité (10) et la plaque de câblage (22) sont munies de moyens de positionnement de façon telle que la plaque de câblage (22) ne peut être raccordée avec la plaque d'extrémité (10) que selon une certaine orientation.

11. Stator selon l'une quelconque des revendications 1 à 10,
**caractérisé par** des éléments de fixation (46) pouvant être montés de façon amovible dans la région des chambres de contact (20, 30), pour les extrémités des câbles d'enroulement (12) pendant le processus d'enroulement.

12. Stator selon la revendication 11,
**caractérisé en ce que** les éléments de fixation (46) de préférence conçus approximativement en champignons peuvent être respectivement montés selon un agencement s'éloignant en direction radiale du paquet de tôle de stator (2), dans le prolongement de respectivement une fente de passage pour le câble d'enroulement (24) de la chambre de contact respective (20, 30).

13. Stator selon l'une quelconque des revendications 11 ou 12,
**caractérisé en ce que** chaque élément de fixation (46) peut être inséré dans une rainure de maintien axiale (48) moulée dans la plaque d'extrémité (10), ou dans le logement de contact respectif (20, 30).

14. Stator selon l'une quelconque des revendications 1 à 13,
**caractérisé en ce que** la plaque d'extrémité (10) et la plaque de câblage (22) sont respectivement munies d'un orifice de passage (50, 52) pour un conducteur de protection (54).
